# EUROPÄISCHE PATENTSCHRIFT

(11) **EP 1 253 610 B1**
(45) Veröffentlichungstag und Bekanntmachung des Hinweises auf die Patenterteilung: **10.08.2011**
(21) Anmeldenummer: 02004717.1
(22) Anmeldetag: 01.03.2002
(51) Int. Cl.: H01H 31/12, H02B 1/18

(54) **Adapter für das Kontaktieren von Lasttrennschaltern auf Stromsammelschienen**
Adapter for contacting load-break switches on current bus-bars
Adaptateur pour contacter des sectionneurs de coupure en charge sur barres omnibus

(30) Priorität: 23.04.2001 DE 10120006
(43) Veröffentlichungstag der Anmeldung: 30.10.2002
(73) Patentinhaber: EFEN GmbH, 65344 Eltville (DE)
(72) Erfinder: Kahler, Klaus-Dietmar, 65321 Heidenrod (DE); Kilian, Francis, 65366 Giesenheim (DE)
(74) Vertreter: Weber, Roland

(56) Entgegenhaltungen:
- EP-A- 0 262 554
- DE-A1- 2 436 804
- DE-U- 29 512 870

## Beschreibung

Die Erfindung betrifft einen Adapter für das Kontaktieren von Sicherungslasttrennschaltern in Leistenbauform auf Stromsammelschienen mit einem Schienenabstand von 185 mm mittels Kontakthaken, wobei der Mittenabstand der Kontakthaken des Lasttrennschalters 60 mm beträgt, der Adapter ein Trägerprofil aus elektrisch isolierendem Material und an diesem befestigte Kontaktbrücken aufweist, deren Kontaktlaschen auf den Sammelschienen befestigbar sind und deren am entgegengesetzten Ende befindliche Kontaktendfelder mit dem Kontaktschenkel des jeweiligen Einspeisekontaktes des Lasttrennschalters verbindbar sind und wenigstens eine Kontaktbrücke unter Verringerung des Abstandes ihres Kontaktendfeldes zum benachbarten Kontaktendfeld einen verlängerten Brückenabschnitt aufweist.

Sicherungslasttrennschalter in Leistenbauform, manchmal auch Sicherungsunterteile oder Lastschaltleisten genannt, sind in den verschiedensten Ausführungsformen bekannt. Üblicherweise beträgt der Abstand zwischen zwei Sammelschienen 100 mm oder bei einem anderen Sammelschienensystem 185 mm. Bei Lastschaltleisten der Größe 00 beträgt der Mittenabstand der in einer Leiste befindlichen Sicherungseinsätze in Längsrichtung von Einsatz zu Einsatz ebenfalls 100 mm. Deshalb lassen sich Sicherungsunterteile oder Schaltleisten ohne Schwierigkeiten an solchen Sammelschienensystemen anbringen, bei denen der Mittenabstand gleich groß ist.

Will man nun Lastschaltleisten der Größe 00 auf ein Sammelschienensystem aufbringen, bei welchem die Abstände zwischen den Sammelschienen 185 mm betragen, dann ist es bekannt, einen Adapter ähnlich der eingangs genannten Art einzusetzen, um die Abstände zwischen den Stromsammelschienen des Systems einerseits (185 mm) und den Sicherungseinsätzen der Lasttrennschalter andererseits (100 mm) auszugleichen. Eine Kontaktierung von Lasttrennschaltern mit Schrauben oder Haken, deren Befestigungselemente (Schrauben oder Haken) einen gegenseitigen Abstand von 60 mm haben, mit einem Stromsammelschienensystem mit Abstand 185 mm ist bisher nicht möglich.

Hätte man einen Sicherungslasttrennschalter in Leistenbauform, der mittels Kontakthaken mit dem betreffenden Stromsammelschienensystem kontaktiert werden sollte, wobei die Kontakthaken einen Mittenabstand von 60 mm haben, dann wäre auch für diese Ausführungsform ein bequemeres Kontaktieren auf Stromsammelschienen mit einem Schienenabstand von 185 mm erwünscht. Dabei sollte man möglichst nur einen einzigen Adapter benötigen.

Dokument EP-A-0262554 offenbart einen Adapter gemäß dem Oberbegriff des Anspruchs 1.

Der Erfindung liegt daher die Aufgabe zugrunde, einen Adapter ähnlich der eingangs genannten Art zu schaffen, der ohne Zwischenschalten einer besonderen zusätzlichen Adaptereinrichtung ein Kontaktieren von Stromsammelschienen mit einem Schienenabstand von 185 mm auch mittels Kontakthaken erlaubt, wenn deren Abstand voneinander nur 60 mm beträgt.

Erfindungsgemäß wird dies durch Vorsehen der im kennzeichnenden Teil des Anspruchs 1 aufgeführten Merkmale erreicht. Dies gelingt durch nur einen Adapter mit den Merkmalen der Erfindung, obgleich Kontakthaken zum Kontaktieren des Lasttrennschalters verwendet werden, wodurch sich der weitere Vorteil ergibt, daß man gewünschtenfalls sogar den Kabelabgang von seiner ersten Position wahlweise in seine entgegengesetzte zweite Position anordnen kann.

Wie bei dem bekannten Adapter zum Kontaktieren von Lasttrennschaltern mit Sicherungseinsätzen mit einem Mittenabstand von 100 mm auf Schienen mit einem Schienenabstand von 185 mm weist auch der neue Adapter ein Trägerprofil mit daran befestigten Kontaktbrücken auf. Letztere schlagen eine Brücke von den Kontaktlaschen zu Kontaktendfeldern, um die Verbindung von den Sammelschienen einerseits und den Kontaktschenkeln der Einspeisekontakte des Lasttrennschalters andererseits zu ermöglichen. Hierzu dient vorzugsweise der verlängerte Brückenabschnitt der Kontaktbrücke.

Bei der Befestigung von Lasttrennschaltern auf Stromsammelschienen mittels Kontakthaken umgreifen letztere die Stromsammelschienen. Ein ähnliches, zu umgreifendes Element ist erfindungsgemäß bei dem Adapter nun auch in Form der Anschlagkanten vorgesehen. Diese liegen mechanisch und elektrisch wenigstens auf ihrer einen Oberfläche, vorzugsweise auf beiden ihrer Oberflächen, frei da, so daß die Kontakthaken nur über diese Anschlagkanten hinüber zu greifen brauchen bzw. für ein solches Hintergreifen aufgesteckt zu werden brauchen. Das mechanische und elektrische Koppeln besorgt dann die Klemmschraube des Kontakthakens. Damit ferner alle in dieselbe Richtung zeigenden Kontakthaken mit jeweils einer Anschlagkante in Eingriff kommen können, ist erfindungsgemäß vorgesehen, daß alle Anschlagkanten - in Längsrichtung des Adapters gesehen - auf derselben Seite der Kontaktfelder angeordnet sind. Blickt man beispielsweise senkrecht auf einen horizontal liegenden länglichen Adapter, dann befinden sich erfindungsgemäß alle Anschlagkanten am rechten Ende der Kontaktendfelder (entsprechend könnten sie auch am linken Ende angeordnet sein). Es versteht sich dabei, daß der Abstand der Anschlagkanten untereinander entsprechend gleich dem Abstand der aus dem Lasttrennschalter herausragenden Kontakthaken ist. Weiterhin sind in dem aus isolierendem Material bestehenden Trägerprofil Ausnehmungen neben den Anschlagkanten in solcher Größe und solcher Anordnung vorgesehen, daß die Kontakthaken in diese Ausnehmungen abgesenkt und von diesen über die Anschlagkante geschoben werden können.

Besonders zweckmäßig ist es dabei, wenn erfindungsgemäß die frei verfügbare Länge der offenen Ausnehmung - vorzugsweise in Längsrichtung des länglichen Adapters gesehen - größer oder gleich der Länge des Klemmschenkels des Kontakthakens ist. Der Klemmschenkel oder sein entsprechendes anderes längstes Stück an dem Kontakthaken bestimmt das größte Maß der offenen Ausnehmung. Im allgemeinen ist der Klemmschenkel das längste Teil des Kontakthakens, und wenn die offene Ausnehmung länger als der Klemmschenkel ist, versteht man leicht, wie der Kontakthaken durch die Ausnehmung hindurchgeführt werden kann, um die Einschiebeposition des Kontakthakens über die betreffende Anschlagkante zu erreichen. Danach erfolgt der Eingriff des Kontakthakens mit der Anschlagkante.

Wenn sich bei weiterer vorteilhafter Ausgestaltung der Erfindung die Ausnehmung ein Stück weit über die Anschlagkante hinaus unter das Kontaktendfeld erstreckt, liegt die Anschlagkante auf ihren beiden Oberflächen (oben und unten) frei für eine mechanische Befestigung und gleichzeitig einen elektrischen Kontakt. Mit anderen Worten ragt das Kontaktendfeld mit seiner Anschlagkante ein Stück weit frei von dem Trägerprofil dem Kontakthaken entgegen. Dieses Stück ist mindestens so groß wie die Einsteckfläche des Kontakthakens bzw. die Eingrifffläche seines Klemmschenkels.

Es ist weiterhin vorteilhaft, wenn erfindungsgemäß die Anschlagkante am freien Ende des Kontaktendfeldes der Kontaktbrücke gebildet ist. Die Kontaktbrücke ist auf dem oberen bzw. vorderen Hauptträgerfeld des Trägerprofils befestigt. Die Befestigungselemente können bis in das Kontaktendfeld hineinragen oder nahe an deren Grenze. Damit ist das Kontaktendfeld frei für eine seitliche Verlängerung derart, daß die Anschlagkante an dieser Verlängerung vorgesehen werden kann. Ragt nun bei einer bevorzugten Ausführungsform der Erfindung das Kontaktendfeld seitlich und etwa quer zu dem verlängerten Brückenabschnitt hinaus, dann kann man ersichtlich in beiden Längsrichtungen des länglich ausgestalteten Adapters, also in die eine und auch in die entgegengesetzte Richtung, jeweils eine Anschlagkante vorsehen; oder je nach Ausführungsform die Anschlagkante an jedem der Kontaktendfelder auf der einen Seite und wahlweise auf der entgegengesetzten Seite. Es ist dadurch möglich, jeden gewünschten Kabelabgang vorzusehen, wobei der Lasttrennschalter immer von oben über den fest an den Stromsammelschienen angebrachten Adapter einzuhaken ist.

Gemäß der Erfindung ist die Anschlagkante durch wenigstens einen Eingreifschlitz der Kontaktbrücke gebildet, wobei die Kontaktbrücke zum Überbrücken des Abstandes zwischen der Stromsammelschiene und dem Kontaktendfeld im Querschnitt U- oder L-förmig ausgestaltet ist und der Eingreifschlitz zum Teil im Kontaktendfeld und zum Teil in dem senkrecht aufgehenden, die Ebene der Kontaktlasche mit der Ebene des Kontaktendfeldes verbindenden Abschnitt der Kontaktbrücke verläuft. In aller Regel gibt es drei Stromsammelschienen für die Phasen L1, L2 und L3, die mit Hilfe des Adapters mit einem Lasttrennschalter verbunden werden, der ebenfalls drei Sicherungseinsätze enthält. Der Adapter ist nötig, um die unterschiedlichen Mittenabstände der Sicherungseinsätze bzw. ihrer Kontaktschenkel einerseits und der Stromsammelschiene andererseits aneinander anzupassen. Dies erfolgt über die Kontaktbrücken. Dabei kann die mittlere Kontaktbrücke auf der mittleren Stromsammelschiene der Phase L2 aufgeschraubt werden und in derselben Anordnung verbleiben, ob nun ein Lasttrennschalter 60 mm oder 100 mm verwendet wird. Die hierfür vorgesehene Kontaktbrücke ist im Querschnitt vorzugsweise U- oder L-förmig ausgestaltet. Die Anschlagkante ist bei dieser beschriebenen Ausführungsform der Kontaktbrücke im Bereich einer Biegekante zweier Schenkelteile der Kontaktbrükke angeordnet, also zum Teil in dem Kontaktendfeld und zum Teil in dem senkrecht dazu verlaufenden Abschnitt der Kontaktbrücke. Wenn außerdem in diesem Bereich im Trägerprofil wieder die entsprechende Ausnehmung vorgesehen ist, kann man ersichtlich den Kontakthaken in den Eingreifschlitz absenken und von dort in die Klemmposition schieben. Mit anderen Worten ist es erfindungsgemäß also möglich, Anschlagkanten auch dort vorzusehen, wo zwei Felder der Kontaktbrücke längs einer Biegekante, um 90° gegeneinander gebogen, vorgesehen sind.

Weiterhin ist es dabei zweckmäßig, wenn erfindungsgemäß die Breite des Eingreifschlitzes größer oder gleich der Dicke des Klemmschenkels des L- oder U-förmigen Kontakthakens ist. Hierdurch kann man den Kontakthaken garantiert einfach in den Eingreifschlitz - und mit Hilfe der Ausnehmung im Trägerprofil - absenken und von dieser Einführposition danach in die Klemmposition verschieben.

Es ist auch von Vorteil, wenn erfindungsgemäß für doppelschenkelig ausgebildete Kontakthaken jeweils zwei Anschlagkanten paarweise nebeneinander vorgesehen sind, vorzugsweise durch paarweise nebeneinander angeordnete Eingreifschlitze. Bekannt sind bereits Kontakthaken, die in zwei senkrecht zueinander stehenden Richtungen U-förmig ausgebildet sind. Es ergeben sich dadurch nämlich zwei im Abstand voneinander angeordnete Klemmschenkel, denen eine Klemmschraube gegenübersteht. Die zu kontaktierende Stromsammelschiene wird damit in den U-förmigen Raum über dem Klemmschenkel eingeschoben. Das Basisfeld, in welchem die Klemmschraube eingeschraubt ist, bildet in der einen Richtung, der Längsrichtung des Klemmschenkels gesehen ,den verbindenden Teil des ersten U, durch welches die beiden Klemmschenkel gebildet werden. Dadurch kann der Kontakthaken nicht kippen. Die zweite U-förmige Ausnehmung ist die beschriebene über derjenigen Fläche des Klemmschenkels, der mit der Stromsammelschiene in Eingriff kommt. Die beiden, dadurch im Abstand angeordneten Klemmschenkel des Kontakthakens werden daher von den Eingreifschlitzen erfindungsgemäß aufgenommen, welche paarweise nebeneinander angeordnet sind. Da jeder Eingreifschlitz eine Anschlagkante vorsieht, sind damit auch zwei Anschlagkanten nebeneinander angeordnet.

Wie bei den bekannten Adaptern 185 mm/100 mm kann das Trägerprofil so breit ausgestaltet werden, daß zwei Sicherungslasttrennschalter in Leistenbauform parallel nebeneinander anbringbar sind. Deshalb ist es erfindungsgemäß vorteilhaft, wenn auch bei dem hier beschriebenen Adapter zum Kontaktieren von zwei Lasttrennschaltern parallel nebeneinander mittels desselben Adapters als Doppeladapter die Ausnehmungen und die Anschlagkanten paarweise bzw. in zwei Paaren nebeneinander an dem jeweiligen Kontaktendfeld vorgesehen sind. Die vorstehend beschriebenen erfindungsgemäßen Maßnahmen sind damit alle verdoppelt. Gegebenenfalls kann man noch breitere Ausführungsformen vorsehen, um etwa drei Trennschalter parallel nebeneinander anzuordnen usw.

Weitere Vorteile, Merkmale und Anwendungsmöglichkeiten der vorliegenden Erfindung ergeben sich aus der folgenden Beschreibung bevorzugter Ausführungsformen in Verbindung mit den anliegenden Zeichnungen. Von diesen zeigen:
- Figur 1: perspektivisch einen auf drei Stromsammelschienen aufgesetzten Adapter gemäß der Erfindung, bei dem die Kontaktbrücken bei der Draufsicht auf den Adapter sichtbar sind und neben drei Ausnehmungen mit Anschlagkanten drei Kontakthaken eines nicht dargestellten Lasttrennschalters angedeutet sind,
- Figur 2: eine ähnliche Ansicht wie Figur 1, wobei jedoch das Trägerprofil des Adapters zur Verdeutlichung der stromführenden Teile weggelassen ist und außerdem, weil die Ausführung dieses Adapters als Doppeladapter dargestellt ist, neben drei Kontakthaken eines ersten Lasttrennschalters auch die weiteren drei Kontakthaken eines zweiten parallel daneben angeordneten Lasttrennschalters eingezeichnet sind,
- Figur 3: eine Querschnittsansicht entlang einer Mittellinie des Adapters der Figur 1 mit gestrichelt angedeutetem Unterteil eines Lasttrennschalters und
- Figur 4: perspektivisch den auf drei Stromsammelschienen befestigten Adapter gemäß der Erfindung mit einem von zwei parallel zueinander anbringbaren Unterteilen von Lasttrennschaltern.

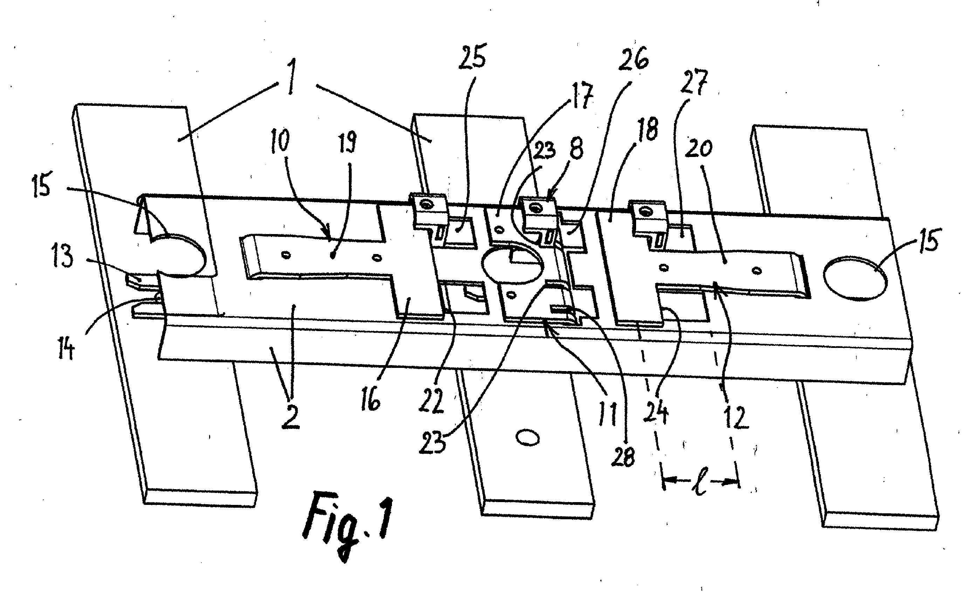

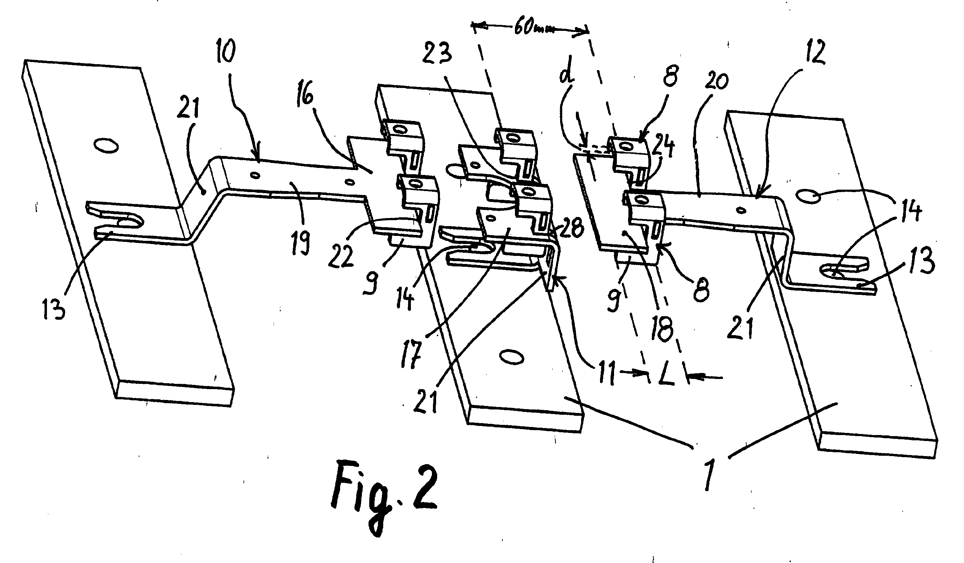

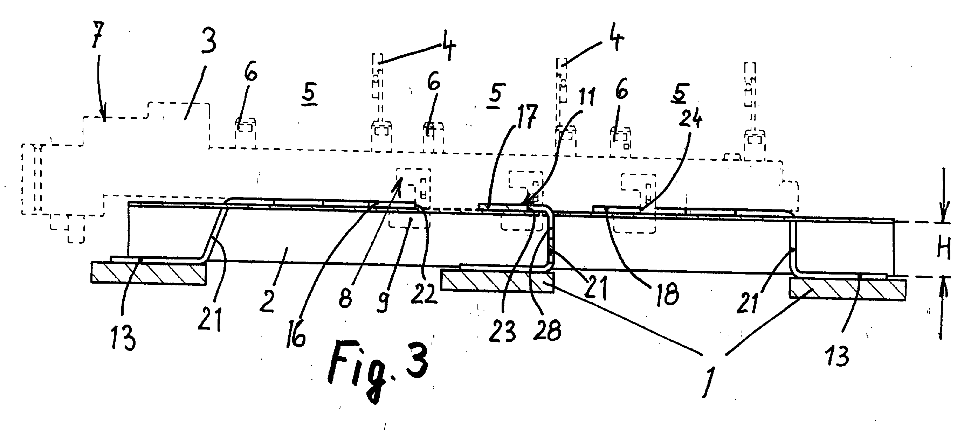

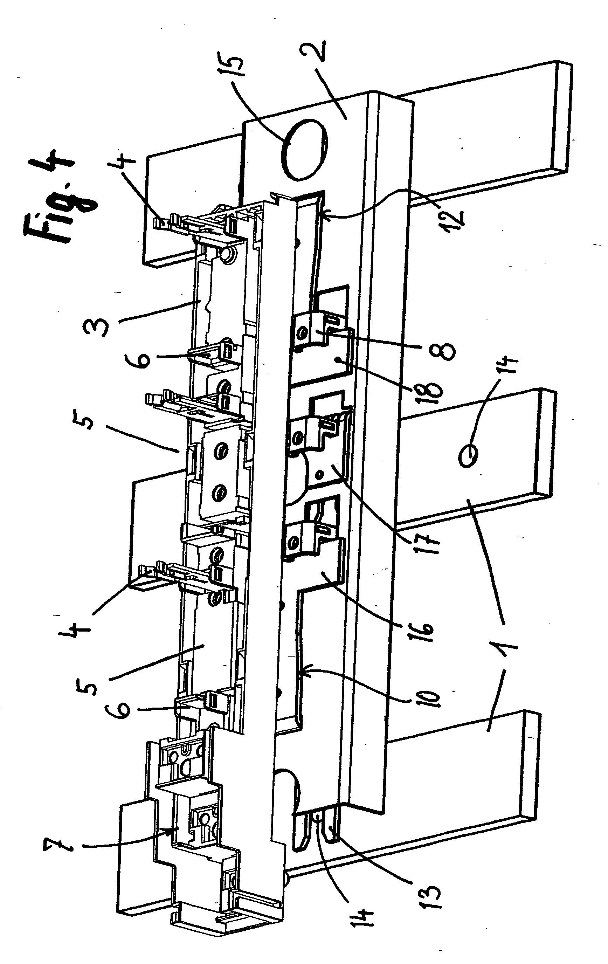

Figur 1 zeigt den auf drei Stromsammelschienen 1 mit einem Schienenabstand von 185 mm befestigten Adapter mit seinem U-förmigen Trägerprofil 2 aus elektrisch isolierendem Material, zum Beispiel Kunststoff, vorzugsweise Polystyrol. Die Sicherungslasttrennschalter sind in den Zeichnungen hier nur teilweise angedeutet. Man erkennt in Figur 3 mit gestrichelten Linien das Unterteil eines Sicherungslasttrennschalters 3 in Leistenbauform, welches in Figur 4 mit dünnen ausgezogenen Linien wiedergegeben ist. Neben den Einspeisekontakten 4 sind drei Aufnahmen 5 für nicht gezeigte Sicherungseinsätze zu erkennen. Von den Abgangskontakten sind nur die gehäuseseitigen Sockel 6 erkennbar. Der Anschlußabschnitt befindet sich bei der Darstellung der Figuren 3 und 4 links und ist insgesamt mit 7 bezeichnet. Man erkennt in den Figuren auch die Kontakthaken 8 mit ihren Klemmschenkeln 9, so daß sich in Blickrichtung der Figur 3 U-Form ergibt. Aber auch in Längsrichtung des Lasttrennschalters gesehen, haben die Kontakthaken 8 U-Form, wie sich aus den perspektivischen Darstellungen der Kontakthaken in den Figuren 1 und 2 ergibt. Dadurch befinden sich zwei Klemmschenkel 9 im Abstand nebeneinander, so daß der Kontakthaken 8 nach dem Befestigen nicht verkippen kann. Der Mittenabstand der Kontakthaken 8 voneinander beträgt bei der hier gezeigten Ausführungsform 60 mm, während der Schienenabstand der Stromsammelschienen voneinander 185 mm beträgt. Diese Abstände sind immer in Längsrichtung des länglich dargestellten Adapters gemessen. Die Dicke d des Klemmschenkels 9 ist in Figur 2 angedeutet und gleich der Dicke des Bleches anzusehen, aus welchem der gesamte Kontakthaken durch ein Stanzbiegeverfahren hergestellt ist.

An dem Trägerprofil 2 aus elektrisch isolierendem Kunststoff sind drei Kontaktbrücken befestigt, bei der in den Zeichnungen hier gewählten Darstellung die linke oder obere, dem Anschlußabschnitt 7 links näher liegende Kontaktbrücke 10, die mittlere Kontaktbrücke 11 und die wieder in Längsrichtung des Adapters gesehen rechts angeordnete Kontaktbrücke 12. An einem Ende weist jede Kontaktbrücke 10, 11, 12 eine Kontaktlasche 13 auf, mit welcher die Kontaktbrücken und damit der gesamte Adapter über nicht dargestellte Schrauben und Befestigungslöcher 14 an den Stromsammelschienen 1 befestigt werden. Für diese Montage sind in dem Trägerprofil 2 große Zugangslöcher 15 vorgesehen, durch welche der Monteur seinen Drehschrauber zu dem zentrisch darunter befindlichen Befestigungsloch 14 ausrichten kann. Jeder Kontakthaken 8 weist auf seiner der Kontaktlasche 13 entgegensetzten Seite ein Kontaktendfeld 16, 17, 18 auf. Der linken Kontaktbrücke 10 entspricht das Kontaktendfeld 16, der mittleren Kontaktbrücke 11 entspricht das mittlere Kontaktendfeld 17, und der rechten Kontaktbrücke 12 entspricht das Kontaktendfeld 18.Ordnet man das mittlere Kontaktendfeld 17 der mittleren Kontaktbrücke 11 der mittleren Stromsammelschiene 1 (Phase L2) zu, dann muß - für die Funktion des Adapters - der Abstand von 60 mm des jeweils äußeren Kontaktendfeldes 16, 18 zu dem mittleren Kontaktendfeld 17 durch je einen verlängerten Brückenabschnitt 19, 20 erfolgen. Mit 19 ist der der linken Kontaktbrücke 10 zugeordnete Brückenabschnitt und mit 20 der der Kontaktbrücke 12 rechts zugeordnete Brückenabschnitt bezeichnet. Die mittlere Kontaktbrücke 11 ist ersichtlich (besonders deutlich in Figur 3) U-förmig ausgestaltet und weist nicht einen verlängerten Brückenabschnitt auf, weil das mittlere Kontaktendfeld 17 bereits zentrisch über das Befestigungsloch 14 der mittleren Stromsammelschiene plaziert ist.

Die Höhe des Trägerprofils 2 ist in Figur 3 mit H bezeichnet. Dadurch kann man die Ebene des jeweiligen Kontaktendfeldes 16, 17, 18 in diesem Abstand H zu der Stromsammelschiene 1 bzw. der Ebene ihrer gemeinsamen Oberfläche anordnen. Jede Kontaktbrücke 10, 11, 12 hat einen senkrecht aufgehenden Abschnitt 21, welcher die Ebene der Kontaktlasche 13 der Kontaktbrücke 10, 11, 12 mit der Ebene des Kontaktendfeldes 16, 17, 18 verbindet. Durch diesen senkrecht aufgehenden Abschnitt 21 überbrückt die Kontaktbrücke 11 den Abstand H. Bei den hier dargestellten Ausführungsformen befindet sich der jeweilige verlängerte Brückenabschnitt 19, 20 in der oberen Ebene des jeweiligen Kontaktendfeldes 16, 18. Es handelt sich hier um dieselbe Ebene wie die des Kontaktendfeldes 17.

Damit die Kontakthaken 8 ähnlich wie die eine Kante einer Stromsammelschiene auch bei dem Adapter eine Kante umgreifen können, welche der mechanischen und elektrischen Kontaktierung dient, ist jedes Kontaktendfeld 16, 17, 18 mit einer Anschlagkante 22, 23, 24 versehen. Die obere Hauptebene des Trägerprofils 2 hat außerdem neben jeder Anschlagkante 22, 23, 24 eine Ausnehmung 25, 26, 27. Die freie verfügbare Länge der offenen Ausnehmung ist dabei etwas größer als die Länge L (Figur 2) des Klemmschenkels 9 des Kontakthakens 8 gestaltet. Bei allen drei Kontakthaken 8 kann daher der Klemmschenkel 9 von unten auch gegen die metallene Oberfläche des Kontaktendfeldes 16, 17, 18 festgeklemmt werden.

Bei der besonders ausgestalteten Kontaktbrücke 11, welche der mittleren Stromsammelschiene zugeordnet ist und nicht einen verlängerten Brückenabschnitt aufweist, befindet sich die Anschlagkante 23 nicht an einem freien Ende des Kontaktendfeldes 17, sondern wird durch einen Eingreifschlitz 28 der Kontaktbrücke 11 gebildet.

Wenn der Kontakthaken 8 wie bei den hier dargestellten Ausführungsformen in zwei Richtungen U-förmig ist und sich folglich zwei Klemmschenkel 9 im Abstand nebeneinander befinden, müssen sich auch zwei Eingreifschlitze 28 nebeneinander befinden, wie in den Zeichnungen dargestellt ist. Durch diese zwei nebeneinander zur Bildung eines Paares angeordneten Eingreifschlitze 28 werden auch zwei Anschlagkanten 23 paarweise gebildet.

Will man außerdem den Adapter in der in den Zeichnungen dargestellten Weise als Doppeladapter ausgestalten, so daß man zwei Sicherungslasttrennschalter in Leistenbauform parallel nebeneinander anbringt bzw. anbringen kann, dann sind sowohl die Ausnehmungen 25, 26, 27 als auch die diesen zugeordneten Anschlagkanten 22, 23, 24 nebeneinander an dem jeweiligen Kontaktendfeld 16, 18 vorgesehen, wobei für das mittlere Kontaktendfeld 17 ein Anordnen von zwei Paaren von Anschlagkanten 23, d.h. von zwei Paaren von Eingreifschlitzen 28 in der in den Figuren gezeigten Weise nebeneinander, vorgesehen ist..

### Bezugszeichenliste:

- 1: Stromsammelschiene
- 2: U-förmiges Trägerprofil
- 3: Sicherungslasttrennschalter
- 4: Einspeisekontakte
- 5: Aufnahmen für Sicherungseinsätze
- 6: gehäuseseitiger Sockel des Abgangskontakts
- 7: Anschlußabschnitt
- 8: Kontakthaken
- 9: Klemmschenkel
- 10: linke Kontaktbrücke
- 11: mittlere Kontaktbrücke
- 12: rechte Kontaktbrücke
- 13: Kontaktlasche
- 14: Befestigungslöcher
- 15: Zugangslöcher
- 16: linkes Kontaktendfeld
- 17: mittleres Kontaktendfeld
- 18: rechtes Kontaktendfeld
- 19: verlängerter linker Brückenabschnitt
- 20: verlängerter rechter Brückenabschnitt
- 21: senkrecht aufgehender Abschnitt
- 22: linke Anschlagkante
- 23: mittlere Anschlagkante
- 24: rechte Anschlagkante
- 25: linke Ausnehmung
- 26: mittlere Ausnehmung
- 27: rechte Ausnehmung
- 28: Eingreifschlitz

- d: Dicke des Klemmschenkels
- H: Höhe des Trägerprofils
- I: Länge der Ausnehmung
- L: Länge des Klemmschenkels

## Patentansprüche

1. Adapter für das Kontaktieren von Sicherungslasttrennschaltem (3) in Leistenbauform auf Stromsammelschienen (1) mittels Kontakthaken (8), wobei sich der Mittenabstand der Kontakthaken (8) des Lasttrennschalters (3) kleiner als der Schienenabstand ist, der Adapter ein Trägerprofil (2) aus elektrisch isolierendem Material und an diesem befestigte Kontaktbrücken (10, 11, 12) aufweist, deren Kontaktlaschen (13) auf den Sammelschienen (1) befestigbar sind und deren am entgegengesetzten Ende befindliche Kontaktendfelder (16, 17, 18) mit dem Kontaktschenkel des jeweiligen Einspeisekontaktes des Lasttrennschalters (3) verbindbar sind und wenigstens eine Kontaktbrücke (10, 12) unter Verringerung des Abstandes ihres Kontaktendfeldes (16, 18) zum benachbarten Kontaktendfeld (17) einen verlängerten Brückenabschnitt (19, 20) aufweist, jedes Kontaktendfeld (16, 17, 18) eine mit einem Kontakthaken (8) in Eingriff bringbare Anschlagkante (22, 23, 24) derart aufweist, dass alle Anschlagkanten (22, 23, 24) parallel zueinander und auf derselben Seite der Kontaktendfelder (16, 17, 18) zu liegen kommen und dass neben der Anschlagkante (22, 23, 24) im Trägerprofil (2) eine Ausnehmung (25, 26, 27) angebracht ist, und wobei die Kontaktbrücke (11) zum Überbrücken des Abstandes (H) zwischen der Stromsammelschiene (1) und dem Kontaktendfeld (16, 17, 18) im Querschnitt U- oder L-förmig ausgestaltet ist, **dadurch gekennzeichnet, dass** der Schienenabstand 185 mm ist und der Mittenabstand der Kontakthaken (8) des Lasttrennschalters (3) 60 mm ist, dass die Anschlagkante (23) durch wenigstens einen Eingreifschlitz (28) der Kontaktbrücke (11) gebildet ist und der Eingriffschlitz (28) zum Teil im Kontaktendfeld (17) und zum Teil in dem senkrecht aufgehenden, die Ebene der Kontaktlasche (13) mit der Ebene des Kontaktendfeldes (16, 17, 18) verbindenden Abschnitt (21) der Kontaktbrücke (10, 11, 12) verläuft.

2. Adapter nach Anschluss 1, **dadurch gekennzeichnet, dass** die freie verfügbare Länge der offenen Ausnehmung (25, 26, 27) größer oder gleich der Länge (L) des Klemmschenkels (9) des Kontakthakens (8) ist.

3. Adapter nach Anspruch 1 oder 2, **dadurch gekennzeichnet, dass** sich die Ausnehmung (25, 26, 27) ein Stück weit über die Anschlagkante (22, 23, 24) hinaus unter das Kontaktendfeld (16, 17, 18) erstreckt.

4. Adapter nach einem der Ansprüche 1 bis 3, **dadurch gekennzeichnet, dass** die Anschlagkante (22, 23, 24) am freien Ende des Kontaktendfeldes (16, 17, 18) der Kontaktbrücke (10, 11, 12) gebildet ist.

5. Adapter nach einem der Ansprüche 1 bis 4, **dadurch gekennzeichnet, dass** die Breite des Eingreifschlitzes (28) größer oder gleich der Dicke (d) des Klemmschenkels (9) der L- oder U-förmigen Kontakthakens (8) ist.

6. Adapter nach einem der Ansprüche 1 bis 5, **dadurch gekennzeichnet, dass** für doppelschenkelig ausgebildete Kontakthaken (8) jeweils zwei Anschlagkanten (23) paarweise nebeneinander vorgesehen sind, vorzugsweise durch paarweise nebeneinander angeordnete Eingreifschlitze (28).

7. Adapter nach einem der Ansprüche 1 bis 6, **dadurch gekennzeichnet, dass** zum Kontaktieren von zwei Sicherungslasttrennschaltem in Leistenbauform parallel nebeneinander mittels desselben Adapters als Doppeladapter die Ausnehmungen (25, 26, 27) und die Anschlagkanten (22, 23, 24) paarweise bzw. in zwei Paaren nebeneinander an dem jeweiligen Kontaktendfeld (16, 17, 18) vorgesehen sind.

## Claims

1. An adaptor for contacting fuse load break switches (3) in strip configuration on current bus bars (1) by means of contact hooks (8), wherein the centre-to-centre spacing of the contact hooks (8) of the load break switch (3) is less than the bar spacing, the adaptor has a carrier profile member (2) of electrically insulating material and contact bridges (10, 11, 12) which are fixed thereto and whose contact tongues (13) can be fixed on the bus bars (1) and whose contact end areas (16, 17, 18) disposed at the opposite end can be connected to the contact limbs of the respective feed contact of the load break switch (3) and at least one contact bridge (10, 12) has an extended bridge portion (19, 20) with a reduction in the spacing of its contact end area (16, 18) relative to the adjacent contact end area (17), each contact end area (16, 17, 18) has an abutment edge (22, 23, 24) which can be brought into engagement with a contact hook (8), in such a way that all abutment edges (22, 23, 24) come to lie in mutually parallel relationship and on the same side of the contact end areas (16, 17, 18), and an opening (25, 26, 27) is provided beside the abutment edge (22, 23, 24) in the carrier profile member (2), and wherein the contact bridge (11) is of an U-shaped or L-shaped cross-sectional configuration for bridging over the spacing (H) between the current bus bar (1) and the contact end field (16, 17, 18), **characterised in that** the bar spacing is 185 mm and the centre-to-centre spacing of the contact hooks (8) of the load break switch (3) is 60 mm, the abutment edge (23) is formed by at least one engagement slot (28) of the contact bridge (11) and the engagement slot (28) extends in part in the contact end area (17) and in part in the perpendicularly upwardly extending portion (21) of the contact bridge (10, 11, 12), that connects the plane of the contact tongue (13) to the plane of the contact end area (16, 17, 18).

2. An adaptor according to claim 1 **characterised in that** the free available length of the open opening (25, 26, 27) is greater than or equal to the length (L) of the clamping limb (9) of the contact hook (8).

3. An adaptor according to claim 1 or claim 2 **characterised in that** the opening (25, 26, 27) extends by a portion beyond the abutment edge (22, 23, 24) under the contact end area (16, 17, 18).

4. An adaptor according to one of claims 1 to 3 **characterised in that** the abutment edge (22, 23, 24) is formed at the free end of the contact end area (16, 17, 18) of the contact bridge (10, 11, 12).

5. An adaptor according to one of claims 1 to 4 **characterised in that** the width of the engagement slot (28) is greater than or equal to the thickness (d) of the clamping limb (9) of the L-shaped or U-shaped contact hook (8).

6. An adaptor according to one of claims 1 to 5 **characterised in that** for contact hooks (8) of a double-limb configuration two abutment edges (23) are respectively provided in paired mutually juxtaposed relationship, preferably by engagement slots (28) arranged in paired mutually juxtaposed relationship.

7. An adaptor according to one of claims 1 to 6 **characterised in that** for contacting two fuse load break switches in strip form in mutually parallel juxtaposed relationship by means of the same adaptor in the form of a double adaptor the openings (25, 26, 27) and the abutment edges (22, 23, 24) are provided as a pair or in two pairs in mutually juxtaposed relationship on the respective contact end area (16, 17, 18).

## Revendications

1. Adaptateur pour la mise en contact de disjoncteurs de charge de sécurité (3) conformés en baguette sur des barres collectrices de courant (1) au moyen de crochets de contact (8), la distance de centre à centre entre les crochets de contact (8) du disjoncteur de charge (3) étant inférieure à l'écartement des barres, l'adaptateur comportant un support profilé (2) en matériau électriquement isolant et des ponts de contact (10, 11, 12), fixés à celui-ci, dont les pattes de contact (13) peuvent être fixées sur les barres collectrices (1) et dont les zones d'extrémité de contact (16, 17, 18) se trouvant à l'extrémité opposée peuvent être reliées à la branche de contact du contact d'alimentation correspondant du disjoncteur de charge (3) et au moins un pont de contact (10, 12) comportant une portion de pont allongée (19, 20) obtenue en réduisant la distance de leur zone de contact (16, 18) à la zone de contact adjacente (17), chaque zone de contact (16, 17, 18) comportant un bord de butée (22, 23, 24) pouvant être amené en engagement avec un crochet de contact (8) de sorte que les bords de butée (22, 23, 24) viennent se placer parallèlement l'un à l'autre et du même côté que les zones de contact (16, 17, 18) et que, à côté du bord de butée (22, 23, 24), un évidement (25, 26, 27) est ménagé dans le support profilé (2), et le pont de contact (11) étant conformé en U ou en L en coupe transversale afin de couvrir la distance (H) entre la barre collectrice de courant (1) et la zone de contact (16, 17, 18), **caractérisé en ce que** l'écartement des barres est de 185 mm et la distance centre à centre entre les crochets de contact (8) du disjoncteur de charge (3) est de 60 mm, **en ce que** le bord de butée (23) est formé par au moins une fente d'engagement (28) du pont de contact (11) et la fente d'engagement (28) s'étend en partie dans la zone de contact (17) et en partie dans la portion (21) du pont de contact (10, 11, 12) qui se projette perpendiculairement et relie le plan de la patte de contact (13) au plan de la zone de contact (16, 17, 18).

2. Adaptateur selon la revendication 1, **caractérisé en ce que** la longueur libre disponible de l'évidement ouvert (25, 26, 27) est supérieure ou égale à la longueur (L) de la branche de serrage (9) du crochet de contact (8).

3. Adaptateur selon la revendication 1 ou 2, **caractérisé en ce que** l'évidement (25, 26, 27) s'étend un peu au-delà du bord de butée (22, 23, 24) sous la zone de contact (16, 17, 18).

4. Adaptateur selon l'une des revendications 1 à 3, **caractérisé en ce que** le bord de butée (22, 23, 24) est formé à l'extrémité libre de la zone de contact (16, 17, 18) du pont de contact (10, 11, 12).

5. Adaptateur selon l'une des revendications 1 à 4, **caractérisé en ce que** la largeur de la fente d'engagement (28) est supérieure ou égale à l'épaisseur (d) de la branche de serrage (9) du crochet de contact (8) en forme de L ou de U.

6. Adaptateur selon l'une des revendications 1 à 5, **caractérisé en ce que** des crochets de contact (8) à double branche sont dotés chacun de deux bords de butée (23) disposés par paire l'un à côté de l'autre, de préférence en passant à travers des fentes d'engagement (28) disposées par paire l'une à côté de l'autre.

7. Adaptateur selon l'une des revendications 1 à 6, **caractérisé en ce que** les évidements (25, 26, 27) et les bords de butée (22, 23, 24) sont prévus par paires ou en deux paires l'une à côté de l'autre au niveau de la zone de contact correspondante (16, 17, 18) pour établir le contact entre deux disjoncteurs de charge de sécurité conformés en baguette et disposés parallèlement l'un à côté de l'autre au moyen du même adaptateur que le double adaptateur.
